# FASCICULE DE BREVET EUROPEEN

(11) **EP 0 957 285 B1**
(45) Date de publication et mention de la délivrance du brevet: **25.06.2003**
(21) Numéro de dépôt: 99401008.0
(22) Date de dépôt: 23.04.1999
(51) Int. Cl.: F16F 13/10

(54) **Support hydroélastique, notamment pour la suspension d'un groupe motopropulseur dans la caisse d'un véhicule automobiles**
Hydroelastisches Lager, insbesondere für die Aufhängung einer Antriebseinheit an einer Kraftfahrzeugkarosserie
Hydroelastic support in particular for the suspension of an automotive vehicle drive unit to the vehicle body

(30) Priorité: 13.05.1998 FR 9806035
(43) Date de publication de la demande: 17.11.1999
(73) Titulaire: AUTOMOBILES PEUGEOT, 75116 Paris (FR); AUTOMOBILES CITROEN, 92200 Neuilly-sur-Seine (FR)
(72) Inventeur: Le Fol, Marcel, 35410 Domloup (FR)
(74) Mandataire: Lanceplaine, Jean-Claude

(56) Documents cités:
- EP-A- 0 497 708
- EP-A- 0 725 227
- US-A- 4 921 232
- PATENT ABSTRACTS OF JAPAN vol. 007, no. 005 (M-184), 11 janvier 1983 (1983-01-11) & JP 57 163746 A (TOYODA GOSEI KK), 8 octobre 1982 (1982-10-08)

## Description

La présente invention a pour objet un support hydroélastique destiné à être interposé entre deux ensembles à suspendre l'un par rapport à l'autre, notamment pour la suspension d'un groupe motopropulseur dans une caisse d'un véhicule automobile.

Les supports hydroélastiques comportent généralement un corps formé par une masse en matériau élastomère reliant une armature supérieure et une armature inférieure fixées respectivement sur les deux éléments et une chambre de travail délimitée par ladite masse en matériau élastomère et par une cloison transversale au-dessous de laquelle est fixée une membrane inférieure souple délimitant avec ladite cloison transversale une chambre d'expansion. Un tel support est connu du document EP-A-0 497 708.

La chambre d'expansion est reliée à la chambre de travail par une chambre intermédiaire et des orifices de communication et ces chambres sont remplies de liquide.

La masse en matériau élastomère fait fonction de suspension élastique et participe également, avec les autres éléments du support, à la constitution d'un dispositif d'amortissement hydraulique de vibrations qui a notamment pour fonction d'assurer un bon filtrage des vibrations à haute fréquence et de faible amplitude émises par un moteur de véhicule automobile et un bon amortissement des vibrations à basse fréquence et de forte amplitude entre le moteur et la caisse du véhicule.

Jusqu'à présent, l'une des armatures de la masse en matériau élastomère et notamment l'armature inférieure constitue un boîtier dans lequel sont placés les principaux composants du support et qui sont reliés à ce boîtier par adhérisation et/ou par sertissage.

Un tel type de support hydroélastique présente des dimensions et des caractéristiques d'amortissement qui sont spécifiques à chaque support, cette conception étant donc peu adaptée à la fabrication en grande série d'une gamme de supports hydroélastiques dont chacun possède des caractéristiques d'amortissement adaptées à son utilisation.

L'invention a pour but d'éviter ces inconvénients en proposant un support hydroélastique compact, dont la conception est simplifiée ce qui permet de diminuer le coût de l'ensemble ainsi que celui du montage grâce à la diminution du nombre de composants, tout en permettant de pouvoir réaliser une gamme de supports possédant des caractéristiques d'amortissement adaptées à leur utilisation et d'aboutir à une standardisation de nombreux composants.

L'invention a donc pour objet un support hydroélastique destiné à être interposé entre deux éléments à suspendre l'un par rapport à l'autre, notamment pour la suspension d'un groupe motopropulseur dans une caisse d'un véhicule automobile, comprenant un corps formé par une masse en un matériau élastomère reliant une armature supérieure à une armature inférieure fixées respectivement sur les deux éléments, une chambre de travail délimitée par ladite masse en matériau élastomère et par une cloison transversale d'un ensemble comprenant une chambre d'expansion délimitée par une membrane souple et par la cloison transversale, la chambre d'expansion étant reliée à la chambre de travail par un conduit de longueur importante par rapport à son diamètre et des orifices de communication et lesdites chambres étant remplies de liquide, caractérisé en ce que l'ensemble est indépendant du corps et comporte une virole périphérique munie d'un bord de sertissage sur l'armature inférieure de ce corps et d'un bord d'un sertissage sur la membrane inférieure souple.

Selon d'autres caractéristiques de l'invention :
- la cloison transversale est formée par une première partie solidaire et s'étendant transversalement à l'intérieur de ladite virole et par une seconde partie disposée dans cette virole au-dessous de la première partie, lesdites parties délimitant entres elles ledit conduit,
- les deux parties de la cloison transversale comportent chacune un passage axial entre lesquels est interposé un clapet de découplage hydraulique muni d'un bourrelet périphérique de maintien dudit clapet entre lesdites parties de la cloison transversale,
- le conduit s'étend autour dudit clapet,
- la première partie de la cloison transversale comporte au moins un orifice de communication du conduit avec la chambre de travail, la seconde partie de ladite cloison transversale comporte au moins un orifice de communication du conduit avec la chambre d'expansion et la virole périphérique comporte un orifice communiquant avec ledit conduit pour le remplissage desdites chambres.

Les caractéristiques et avantages de l'invention apparaîtront au cours de la description qui va suivre, donnée à titre d'exemple et faite en référence aux dessins annexés, sur lesquels :
- la Fig. 1 est une vue éclatée, en coupe axiale, d'un support hydroélastique conforme à l'invention,
- la Fig. 2 est une vue en coupe axiale de la partie inférieure à l'état assemblé du support hydroélastique,
- la Fig. 3 est une vue en coupe axiale du support hydroélastique à l'état assemblé.

Le support hydroélastique représenté sur les figures se compose d'un corps 10 destiné à porter la charge, comme par exemple un groupe motopropulseur d'un véhicule automobile, et d'un ensemble 30 indépendant de ce corps et destiné à assurer le filtrage des vibrations émises par le moteur du véhicule, ainsi que l'amortissement des vibrations entre le moteur et la caisse du véhicule.

Le corps 10 est formé par une masse en matériau élastomère 11 qui relie, d'une part, une armature supérieure 12 en acier et en forme de disque comportant un perçage axial pour le passage d'un organe 13 de liaison avec l'élément à supporter, comme par exemple le groupe motopropulseur d'un véhicule automobile et, d'autre part, une armature inférieure 14 en forme de coupelle.

L'armature inférieure 14 comporte un rebord supérieur 15 muni de pattes 16 de fixation sur la caisse du véhicule automobile, comme par exemple un longeron, et un rebord inférieur 17 de liaison avec l'ensemble 30, comme on le verra ultérieurement.

Le corps 10 est réalisé par surmoulage et adhérisation de l'élastomère sur les armatures 12 et 14.

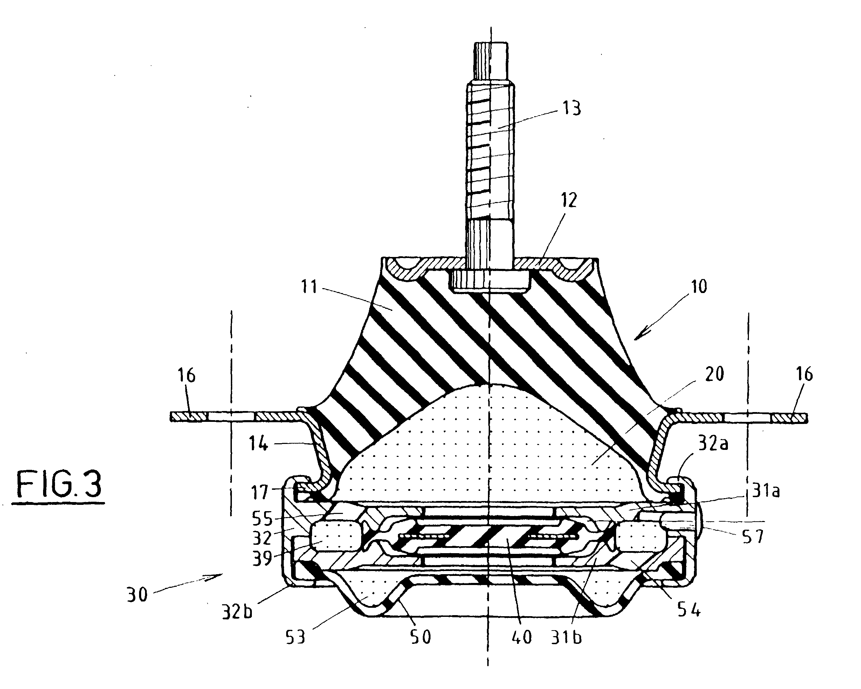

La masse 11 en matériau élastomère comporte, à sa partie inférieure, un évidement 18 qui détermine avec l'ensemble 30 lorsqu'il est monté sur le corps 10, une chambre de travail 20 (Fig. 3).

L'ensemble 30 est formé par une cloison transversale désignée dans son ensemble par la référence 31 et qui se compose d'une première parti 31a solidaire d'une virole périphérique 32 et d'une seconde partie 31b disposée dans la virole 32 au-dessous de ladite première partie 31a.

Le sous ensemble formé par la première partie 31a de la cloison transversale 31 et par la virole 32 est réalisé par moulage d'aluminium ou d'alliage d'aluminium. Il en est de même pour la seconde partie 31b de la cloison transversale 31. Celle-ci peut également être réalisée en matière thermoplastique chargée ou non.

La virole 32 comporte un bord supérieur 32a qui détermine un bord de sertissage sur le rebord inférieur 17 de l'armature inférieure 14 et la première partie 31a de la cloison transversale 31 détermine une cloison de fermeture de la chambre de travail 20.

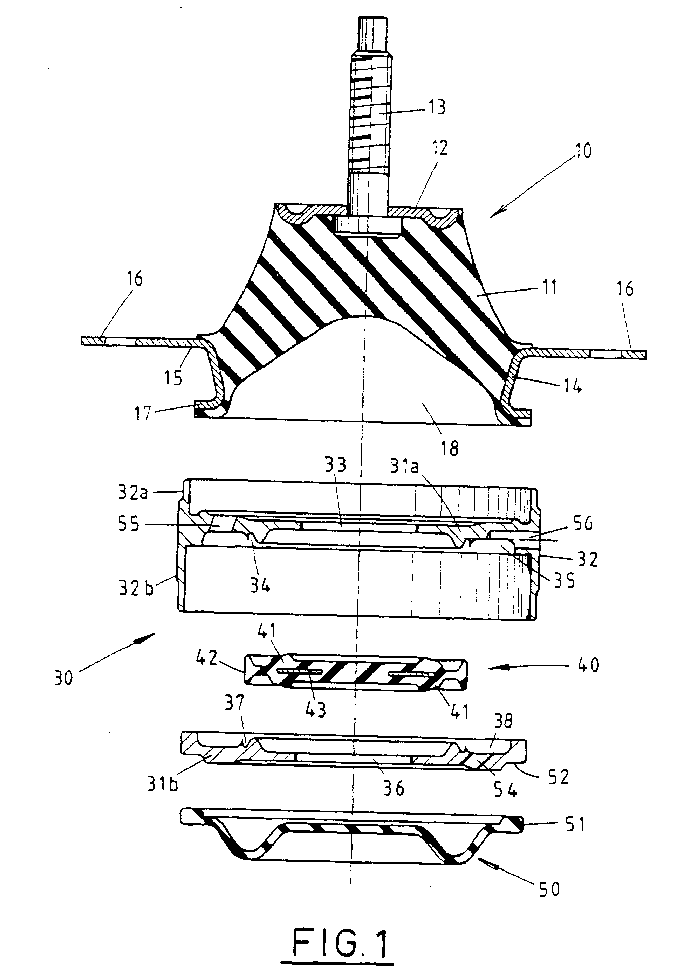

Ainsi que représenté à la Fig.1, la première 31a de la cloison transversale 31 est munie d'un passage axial 33 et sur sa face inférieure, du centre vers la périphérie, d'un logement annulaire 34 et d'une gorge annulaire 35 concentrique audit logement annulaire 34.

De même, la seconde partie 31b de la cloison transversale 31 comporte un passage axiale 36 et sur sa face supérieure, du centre vers la périphérie, un logement annulaire 37 et une gorge annulaire 38 concentrique audit logement annulaire 37.

Lorsque la seconde partie 31b est disposée à l'intérieur de la virole 32 au-dessous de la première partie 31a, les logements annulaires, respectivement 34 et 37, déterminent un logement pour le maintien d'un clapet 40 de découplage hydraulique et les gorges annulaires, respectivement 35 et 38, déterminent un conduit 39 de longueur importante, par rapport à son diamètre, à résonnance contrôlée, en particulier pour le mode de hachis.

Le clapet 40 implanté dans l'ensemble 30 comporte, sur chacune de ses faces, une butée 41 destinée à venir en appui respectivement sur la face inférieure de la première partie 31a de la cloison transversale 31 et sur la face supérieure de la seconde partie 31b de ladite cloison transversale 31.

Ce clapet 40 comporte également un bourrelet périphérique 42 destiné à être emboîté dans les logements 34 et 37 et une armature intérieure 43.

Le clapet 40 est réalisé en élastomère par surmoulage sur l'armature intérieure 43.

Enfin, l'ensemble 30 comporte une membrane inférieure 50 destinée à être positionnée au-dessous de la seconde partie 31b de la cloison transversale 31 à l'intérieur de la virole 32.

Pour maintenir les différents éléments à l'intérieur de la virole 32, c'est à dire le clapet 40, la seconde partie 31b de la cloison transversale 31 et la membrane souple 50, la virole 32 comporte à sa partie inférieure un bord de sertissage 32b destiné à être replié sur le bord périphérique de la membrane 50.

Cette membrane 50 comporte un rebord périphérique 51 en saillie venant s'appliquer dans une gorge annulaire 52 ménagée sur la face inférieure de la seconde partie 31b de la cloison transversale 31.

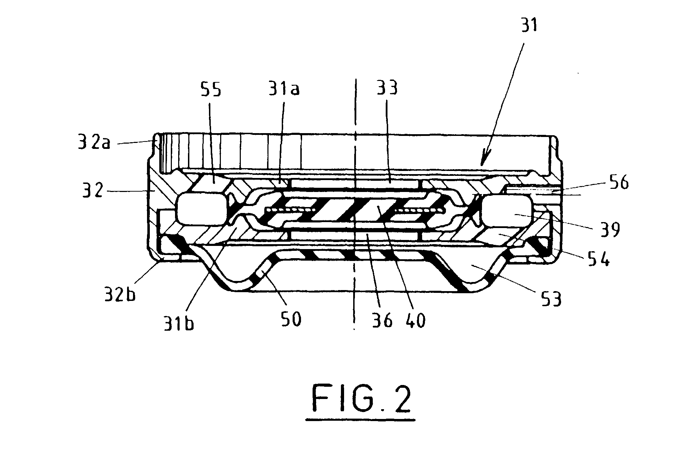

La membrane 50 détermine avec la second partie 31b de la cloison transversale 31, une chambre d'expansion 53 (Figs. 2 et 3) qui est reliée avec le conduit 39 par au moins un orifice de communication 54 ménagé dans la seconde partie 31b de la cloison transversale 31.

Ce conduit 39 est relié à la chambre de travail 20 par au moins un orifice 55 ménagé dans la première partie 31a de la cloison transversale 31.

Les chambres 20 et 53 et le conduit 39 sont remplis d'un liquide, comme par exemple de l'antigel, et à cet effet, la virole périphérique 32 comporte un orifice 56 communiquant avec le conduit 39 pour la mise sous vide de ces chambres et le remplissage desdites chambres par le liquide.

Le montage du support hydroélastique qui peut être effectué automatiquement, semi-automatiquement ou manuellement est réalisé de la façon suivante.

Tout d'abord, l'ensemble 30 est préparé en posant le sous ensemble formé par la première partie 31a et la virole 32 sur un support dans une position inverse à celle représentée sur la Fig. 1.

Ensuite, le clapet 40 est mis en place de telle manière que le bourrelet périphérique 42 soit positionné dans le logement annulaire 34 de la première partie 31 de la cloison transversale 31.

La seconde partie 31b de la cloison transversale 31 est positionnée à l'intérieur de la virole 32 de telle manière que le bourrelet périphérique 42 du clapet 40 vienne se positionner à l'intérieur du logement annulaire 37 de ladite seconde partie 31b.

Ainsi, le clapet 40 est emprisonné à l'intérieur de la cloison transversale 31 et les deux parties, respectivement 31a et 31b de ladite cloison transversale 31, forment le conduit 39. Celui-ci est indexé de façon à avoir la plus grande longueur possible.

La membrane 50 est posée à l'intérieur de la virole 32 afin que le rebord périphérique 51 de ladite membrane 50 vienne se placer à l'intérieur de la gorge 52.

Après le montage de ces différents éléments, le bord 32b de la virole 32 est serti sur le rebord périphérique 51 de la membrane 50, ainsi que représenté à la Fig. 2.

L'ensemble 30 ainsi assemblé est positionné sur le corps 10 et le bord supérieur 32a de la virole 32 est serti sur le rebord inférieur 17 de l'armature inférieure 16 de ce corps 10 de façon à solidariser l'ensemble 30 avec le corps 10, comme représenté à la Fig. 3.

Enfin, la chambre de travail 20, le conduit 39 et la chambre d'expansion 53 sont remplies de liquide.

Pour cela, le vide est effectué à l'intérieur desdites chambres et dudit conduit à partir d'une pompe à vide, non représentée, par l'orifice 56.

Après avoir effectué ce vide, le liquide est introduit par l'orifice 56 afin de remplir les chambres 20 et 53 et le conduit 39.

L'orifice 56 est obturé par exemple par un rivet étanche 57.

Le support hydroélastique selon l'invention présente l'avantage d'être compact et d'une conception simplifiée ce qui permet de diminuer le coût de l'ensemble ainsi que celui du montage grâce à la diminution du nombre de composants.

De plus, le support hydroélastique selon l'invention présente l'avantage d'être modulaire ce qui permet un montage d'un ensemble donné avec un corps de rigidité donnée. Cette disposition permet d'avoir une grande diversité de produits en fonction des groupes motopropulseurs à porter et des vibrations à filtrer du fait du découplage total de la fonction porteuse avec la fonction filtrage-amortissement.

## Revendications

1. Support hydroélastique destiné à être interposé entre deux éléments à suspendre l'un par rapport à l'autre, notamment pour la suspension d'un groupe motopropulseur dans une caisse d'un véhicule automobile, comprenant un corps (10) formé par une masse (11) en matériau élastomère reliant une armature supérieure (12) et une armature inférieure (14) fixées respectivement sur les deux éléments, une chambre de travail (20) délimitée par ladite masse (11) en matériau élastomère et par une cloison transversale (31) d'un ensemble (30) comprenant une chambre d'expansion (53) délimitée par une membrane inférieure souple (50) et par la cloison transversale (31), la chambre d'expansion (53) étant reliée à la chambre de travail (20) par un conduit (39) de longueur importante par rapport à son diamètre et des orifices de communication (54, 55) et lesdites chambres (20, 39, 53) étant remplies de liquide, **caractérisé en ce que** l'ensemble (30) est indépendant du corps (10) et comporte une virole périphérique (32) munie d'un rebord de sertissage (32a) sur l'armature inférieure (17) de ce corps (10) et d'un rebord de sertissage (32b) sur la membrane inférieure souple (50).

2. Support hydroélastique selon la revendication 1, **caractérisé en ce que** la cloison transversale (31) est formée par une première partie (31a) solidaire et s'étendant transversalement à l'intérieur de ladite virole (32) et par un seconde partie (31b) disposée dans cette virole (32) au-dessous de la première partie (31a), lesdites parties (31a, 31b) délimitant entre elles le conduit (39).

3. Support hydroélastique selon la revendication 2, **caractérisé en ce que** les deux parties (31a, 31b) de la cloison transversale (31) comportent chacune un passage axial (33, 36) entre lesquels est interposé un clapet (40) de découplage hydraulique muni d'un bourrelet périphérique (42) de maintien dudit clapet (40) entre lesdites parties (31a, 31b) de la cloison transversale (31).

4. Support hydroélastique selon l'une quelconque des revendications 1 à 3, **caractérisé en ce que** le conduit (49) s'étend autour du clapet (40).

5. Support hydroélastique selon l'une quelconque des revendications précédentes, **caractérisé en ce que** la première partie (31a) de la cloison transversale (31) comporte au moins un orifice de communication (55) du conduit (39) avec la chambre de travail (20), la seconde partie (31b) de ladite cloison transversale (31) comporte au moins un orifice de communication (54) du conduit (39) avec la chambre d'expansion (53) et la virole périphérique (32) comporte un orifice (56) communiquant avec ledit conduit (39) pour le remplissage desdites chambres.

## Patentansprüche

1. Hydroelastischer Halter, der dazu bestimmt ist, zwischen zwei aneinander aufzuhängenden Elementen eingesetzt zu werden, insbesondere für die Aufhängung eines Triebwerks in einer Kraftfahrzeugkarosserie, umfassend einen Körper (10), der von einer Masse (11) aus Elastomer gebildet ist, die einen oberen Beschlag (12) und einen unteren Beschlag (14) verbindet, die jeweils an einem der beiden Elemente befestigt sind, eine Arbeitskammer (20), die von der Masse (11) aus Elastomer und von einer Querwand (31) einer Einheit (30) abgegrenzt ist, die eine Expansionskammer (53) aufweist, die von einer unteren biegsamen Membran (50) und von der Querwand (31) abgegrenzt ist, wobei die Expansionskammer (53) mit der Arbeitskammer (20) durch einen Kanal (39) mit im Verhältnis zu seinem Durchmesser großer Länge und durch Verbindungsöffnungen (54, 55) verbunden ist und die Kammern (20, 39, 53) mit Flüssigkeit gefüllt sind, **dadurch gekennzeichnet, daß** die Einheit (30) vom Körper (10) unabhängig ist und einen Umfangsring (32) aufweist, der mit einem Falzrand (32a) zur Verfalzung an dem unteren Beschlag (17) dieses Körpers (10) und mit einem Falzrand (32b) zur Verfalzung an der unteren biegsamen Membran (50) versehen ist.

2. Hydroelastischer Halter nach Anspruch 1, **dadurch gekennzeichnet, daß** die Querwand (31) von einem ersten Teil (31a), der mit dem Ring (32) fest verbunden ist und sich quer in dessen Innerem erstreckt, und von einem zweiten Teil (31b) gebildet ist, der in diesem Ring (32) unter dem ersten Teil (31a) angeordnet ist, wobei diese Teile (31a, 31b) miteinander den Kanal (39) abgrenzen.

3. Hydroelastischer Halter nach Anspruch 2, **dadurch gekennzeichnet, daß** die beiden Teile (31a, 31b) der Querwand (31) jeweils einen axialen Durchgang (33, 36) aufweisen, zwischen die ein Ventil (40) zur hydraulischen Entkopplung eingesetzt ist, das mit einem Umfangswulst (42) zum Halten des Ventils (40) zwischen diesen Teilen (31a, 31b) der Querwand (31) versehen ist.

4. Hydroelastischer Halter nach einem der Ansprüche 1 bis 3, **dadurch gekennzeichnet, daß** der Kanal (49) sich um das Ventil (40) herum erstreckt.

5. Hydroelastischer Halter nach einem der vorhergehenden Ansprüche, **dadurch gekennzeichnet, daß** der erste Teil (31a) der Querwand (31) mindestens eine Öffnung (55) zur Verbindung des Kanals (39) mit der Arbeitskammer (20) aufweist, der zweite Teil (31b) der Querwand (31) mindestens eine Öffnung (54) zur Verbindung des Kanals (39) mit der Expansionskammer (53) aufweist und der Umfangsring (32) eine mit dem Kanal (39) verbundene Öffnung (56) zum Füllen der Kammern aufweist.

## Claims

1. Hydroelastic support to be interposed between two elements to be suspended relative to one another, especially for the suspension of a motive power unit in a body of a motor vehicle, the support comprising a body (10) formed by a mass (11) of elastomeric material connecting an upper brace (12) and a lower brace (14) which are respectively secured to the two elements, a working chamber (20) delimited by the mass (11) of elastomeric material and by a transverse partition (31) of an assembly (30) comprising an expansion chamber (53) delimited by a supple lower membrane (50) and by the transverse partition (31), the expansion chamber (53) being connected to the working chamber (20) by a duct (39) of substantial length relative to its diameter and communication openings (54, 55) and the chambers (20, 39, 53) being filled with liquid, **characterised in that** the assembly (30) is independent of the body (10) and comprises a peripheral collar (32) provided with a shoulder (32a) for crimping onto the lower brace (17) of the body (10) and with a shoulder (32b) for crimping onto the supple lower membrane (50).

2. Hydroelastic support according to claim 1, **characterised in that** the transverse partition (31) is formed by a first portion (31a) which is fixedly joined and extends transversely to the inside of the collar (32) and by a second portion (31b) located in the collar (32) below the first portion (31a), said portions (31a, 31b) delimiting between them the duct (39).

3. Hydroelastic support according to claim 2, **characterised in that** the two portions (31a, 31b) of the transverse partition (31) each comprise an axial passage (33, 36) between which passages is interposed a hydraulic decoupling valve (40) provided with a peripheral bead (42) for holding the valve (40) between said portions (31a, 31b) of the transverse partition (31).

4. Hydroelastic support according to any one of claims 1 to 3, **characterised in that** the duct (49) extends around the valve (40).

5. Hydroelastic support according to any one of the preceding claims, **characterised in that** the first portion (31a) of the transverse partition (31) comprises at least one opening (55) for the communication of the duct (39) with the working chamber (20), the second portion (31b) of the transverse partition (31) comprises at least one opening (54) for the communication of the duct (39) with the expansion chamber (53) and the peripheral collar (32) comprises an opening (56) communicating with the duct (39) in order to fill the chambers.
